# EUROPEAN PATENT SPECIFICATION

(11) **EP 0 441 399 B1**
(45) Date of publication and mention of the grant of the patent: **02.05.1997**
(21) Application number: 91101798.6
(22) Date of filing: 08.02.1991
(51) Int. Cl.: G11B 9/08

(54) **Position displacement detecting apparatus**
Apparat zur Detektion der Verschiebung der Lage
Dispositif détecteur du déplacement du positionnement

(30) Priority: 09.02.1990 JP 28493/90; 14.01.1991 JP 15961/91
(43) Date of publication of application: 14.08.1991
(73) Proprietor: CANON KABUSHIKI KAISHA, Tokyo (JP)
(72) Inventor: Nose, Hiroyasu, Shimomaruko, Ohta-ku, Tokyo (JP); Miyazaki, Toshihiko, Shimomaruko, Ohta-ku, Tokyo (JP); Oguchi, Takahiro, Shimomaruko, Ohta-ku, Tokyo (JP); Sakai, Kunihiro, Shimomaruko, Ohta-ku, Tokyo (JP); Kawase, Toshimitsu, Shimomaruko, Ohta-ku, Tokyo (JP)
(74) Representative: Weser, Wolfgang

(56) References cited:
- EP-A- 0 325 056
- US-A- 4 481 550
- PATENT ABSTRACTS OF JAPAN vol. 13, no. 422 (P-933)(3770) 20 September 1989 & JP-A-01 154 332
- PATENT ABSTRACTS OF JAPAN vol. 5, no. 146 (P-80)(818) 16 September 1981 & JP-A-56 080 857
- PATENT ABSTRACTS OF JAPAN vol. 6, no. 245 (P-159)(1123) 3 December 1982 & JP-A-57 143 743
- PATENT ABSTRACTS OF JAPAN vol. 5, no. 196 (P-93)(868) 12 December 1981 & JP-A-56 117 328
- PATENT ABSTRACTS OF JAPAN vol. 12, no. 492 (P-804)(3339) 22 December 1988 & JP-A-63 201 963
- PATENT ABSTRACTS OF JAPAN vol. 11, no. 299 (P-621)(2746) 29 September 1987 & JP-A-62 092 185

## Description

### BACKGROUND OF THE INVENTION

### Field of the Invention

The present invention relates to a position displacement detecting apparatus and method suitable for a recording/reproducing apparatus and the like, using, for example, the principle of a scan type tunnel microscope of the kind as defined in the preamble clause of claims 1 and 4, respectively.

### Related Background Art

There is a tendency that the capacity of data recorded by a recent recording apparatus is increasing more and more. As the capacity increases, it is essential that the dimension of a record unit becomes correspondingly small and the record density becomes correspondingly high. For example, the dimension of a record unit of a digital audio disk of optical recording type is now in the order of 1 µm².

A scan type tunnel microscope (hereinafter abbreviated as STM) has been recently developed with which the electron structure of a material surface or near the surface can be directly observed [ refer to G.Binnig et al., Helvectica Physica Acta, 55, 726 (1982)] . With STM, it is possible to measure a real space image irrespective of monocrystalline or amorphous, with high resolution.
Furthermore, it is possible to observe at low power without damaging a medium by a current flowing through it. Still further, STM can operate not only under super high vacuum but also under atmosphere or solution, allowing to apply it to various materials. Wide applications have thus been expected.

STM operates basing upon the fact that if a metal probe and conductive material become as close as about 1 nm and a voltage is applied therebetween, a current will flow therebetween. This current is very sensitive to the distance change between the probe and the conductive material. Therefore, the surface information of a real space can be obtained by scanning the probe while maintaining constant a current or the average distance therebetween. In this case, the resolution in an inplane direction is equal to or larger than one angstrom.

It is possible to record information on a recording medium using the principle of STM. In this case, a record unit of 0.001 µm² or smaller can be recorded by using as the recording medium a material having a memory function responding to voltage/current switching characteristics, such as a thin film layer made of π electron organic compound or chalcogenide.

A voltage in excess of a certain threshold value is applied to a probe. Then, the characteristic of a fine area of a recording medium immediately under the probe changes, thereby allowing to record data. By using the fact that a tunnel current flowing between the probe and the recording medium changes between the recorded area and the unrecorded area, reproducing data becomes possible.

Similar recording/reproducing is possible by using as a recording medium a metal thin film such as Au and Pt whose surface is locally melted or evaporated to make protrusions and recesses upon application of a voltage in excess of a certain threshold voltage.

An apparatus for detecting a position of probe of the kind defined by the precharacterizing features of claim 1 is known from the US-A-4 481 550 disclosing in particular a tracking system wherein tracking control for a reproducing head of a still camera is performed by a wobbling method.

The JP-A-1-154332 discloses to effect tracking control of a probe relative to a data track by the atomic configuration of the recording medium having a striped atomic configuration on a surface thereof.

The JP-A-56-80857 discloses a record player in which the pickup is scanned relative to a bit train while vibrating. A production signal is stored for a predetermined time. The production signal is obtained when the pickup is positioned at one side relative to a center of the vibration. This production signal is compared with a production signal obtained when the pickup is positioned at the other side thereby detecting a tracking error signal.

The JP-A-56-177328 discloses an information reproducing device designed to improve tracking control with wobbling systems and capable of detecting a tracking error signal without a synchronous detector.

The JP-A-63-201963 discloses a sector servo type track follow-up control system in which servo information is stored in the start or end portion of each sector. The tracking control of a recording/reproducing head is performed by using the servo information. The tracking error signal between the samples is estimated by using a previous tracking error signal, and the tracking control is performed on the basis of the estimated signal in order to enable the sector servo system to effect sampling the track error signal only at the start or the end portion of the sector. This results in that the follow-up property of the servo deteriorates in the case that the number of sectors is not great.

### SUMMARY OF THE INVENTION

It is an object of the present invention to provide an apparatus and a method for detecting a position of a probe of the kind defined by the preamble clause of claims 1 and 4, respectively, capable of detecting positional displacement of the probe relative to the data bit train with accuracy.

This object is attained, concerning the apparatus, by the characterizing features of claim 1 and, concerning the method, by the characterizing features of claim 4. Advantageous developments of the invention are defined by the subclaims.

### BRIEF DESCRIPTION OF THE DRAWINGS

Fig. 1 is a block diagram showing the structure of a recording/reproducing apparatus according to the prior art;
Fig. 2 shows the relative positions of a scan locus of a probe and a data train, and the intensity of modulation components of very small vibrations contained in a detected signal;
Fig. 3 shows waveforms of detected tunnel current signals;
Fig. 4 illustrates how data is recorded on a recording medium which changes its electrical characteristic;
Fig. 5 illustrates how data is recorded on a recording medium which changes its surface configuration;
Fig. 6 is a perspective view showing the recording/reproducing apparatus of Fig.1 using a disk recording medium;
Fig. 7 is a block diagram showing the recording/reproducing apparatus according to a preferred embodiment of this invention;
Fig. 8 is a timing chart illustrating the position displacement detecting operation of the apparatus shown in Fig. 7; and
Fig. 9 shows an example of the circuit arrangement of the maximum value detector of the apparatus shown in Fig. 7.

### DETAILED DESCRIPTION OF THE PREFERRED EMBODIMENTS

The embodiments of this invention will be described with reference to the accompanying drawings.

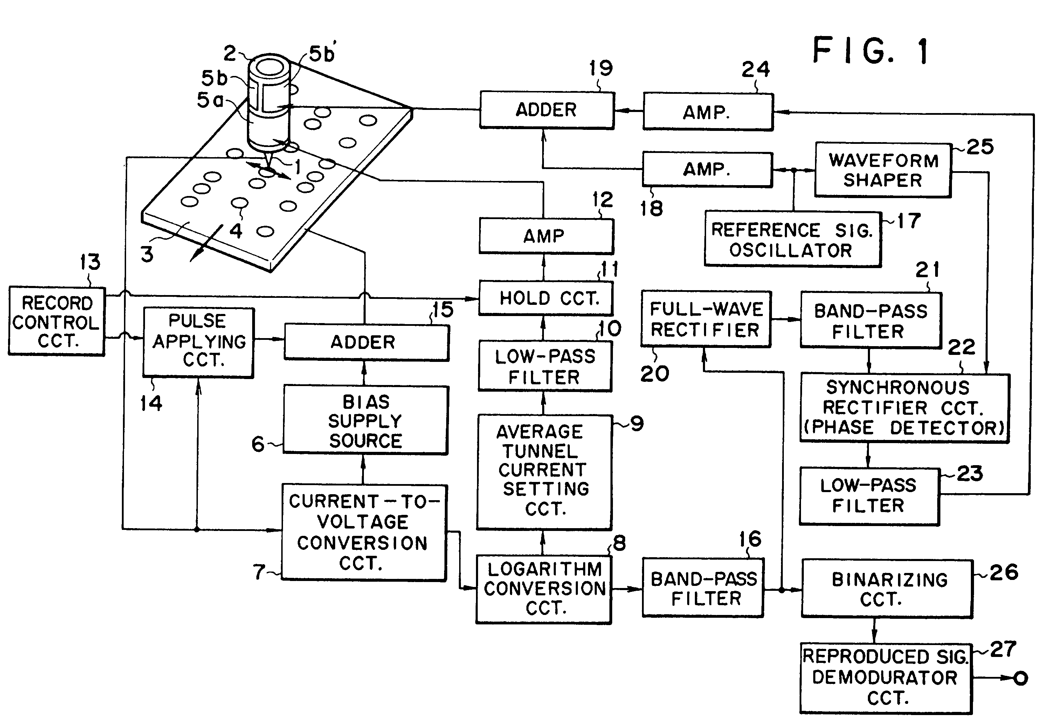

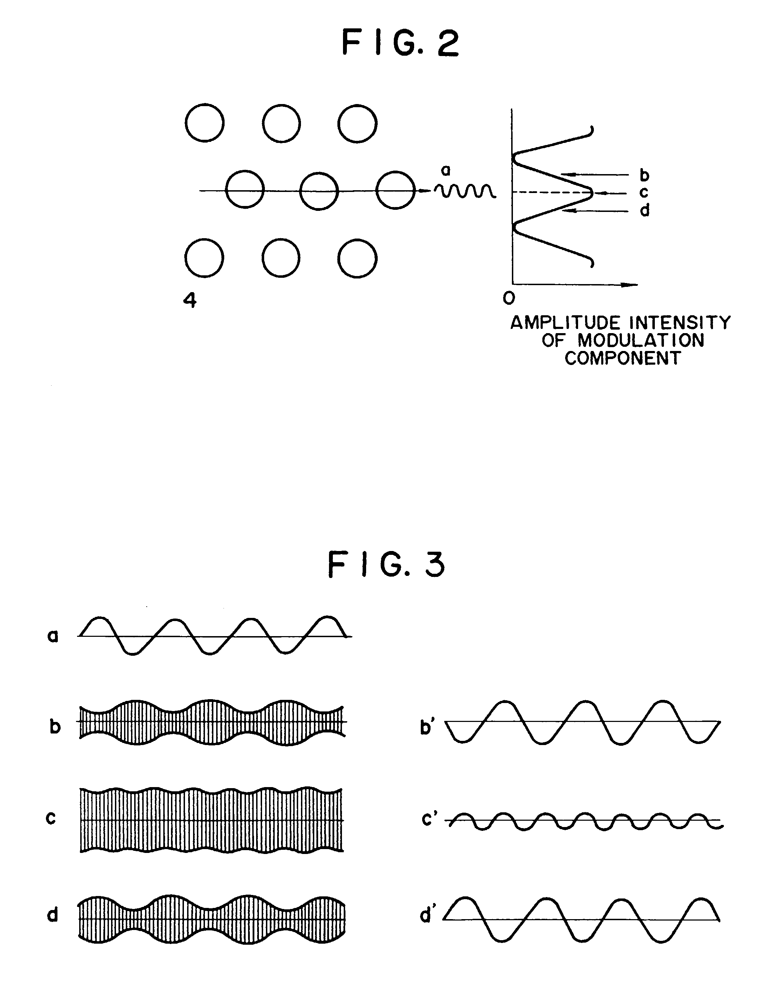

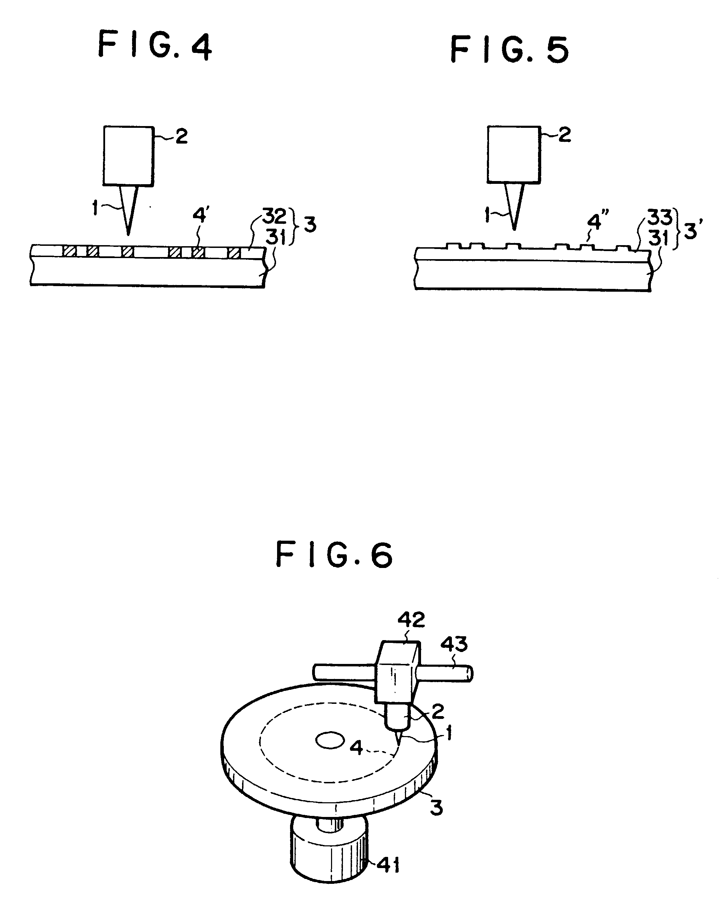

Fig. 1 is a block diagram showing the structure of a recording/reproducing apparatus according to the prior art essentially known from US-A-4 481 550 Fig. 2 shows the relative positions of a probe and a data train, and the intensity of modulation components of very small vibrations contained in a detected signal, Fig. 3 shows waveforms of signals, Figs. 4 and 5 illustrate how data is recorded, and Fig. 6 is a perspective view showing a disk recording medium and the recording/reproducing apparatus of the first embodiment for recording data into or reproducing data from the disk.

Referring to Fig. 6, the outline of the structure of the apparatus will be described. Reference numeral 1 represents a probe for recording/reproducing information, 2 a cylindrical piezoelectric element for driving the probe 1, 3 a recording medium, and 4 a data train recorded on the recording medium.

The recording medium of a disk type is rotated by a motor 41 at a constant angular velocity or at a constant linear velocity. The data train 4 is recorded on the recording medium 3 either spirally or concentrically. The probe 1 along with the cylindrical piezoelectric element 2 is fixed to a head unit 42 which is linearly driven in the radial direction of the recording medium 3 along a guide shaft 43 by means of a drive mechanism such as a linear motor (not shown). Therefore, any desired data train can be accessed for data recording/reproducing. An access to a target data train is achieved by detecting the position of the heat unit 42 with a position detector such as a well-known linear encoder and adjusting the position of the head unit 42. After the access, the probe is controlled (tracking control) to track the target data train in the manner described later.

The recording medium 3 will be described next with reference to Fig. 4. The recording medium 3 shown in Fig. 4 is constituted by a thin film recording layer 32 made of such as π electron organic compound and chalcogenide, and a conductive substrate 31. In recording data, the probe 1 is caused to access the position where a data train is recorded. A bias voltage is applied between the probe 1 and the substrate 31 by using a voltage supply source (not shown). Then, the probe 1 and the recording medium 32 are made close to each other to the extent that a tunnel current flows therebetween. While maintaining the distance between the probe 1 and the recording medium 32 constant, the recording medium 3 is rotated by a motor 41 shown in Fig. 6. When the probe 1 comes to a predetermined position of the recording layer 32, there is applied between the probe 1 and the substrate 31 a voltage in excess of the threshold value of the recording layer material. As a result, the electrical characteristic of a fine area immediately below the probe will change (characteristic changed area 4'). For example, this area is assumed to be a data bit (ON bit) of binary data "1" state, whereas the area not applied with a voltage in excess of the threshold voltage and having the original electrical characteristic is assumed to be a data bit (OFF bit) of binary data "0" state. By rotating the recording medium 3 to provide a relative motion between the recording layer 32 and the probe 1, and applying a voltage in excess of the threshold value at particular positions of the recording layer 32 in accordance with record information, it is possible to record binary data on the recording layer 32 as shown in Fig. 4.

In reproducing information recorded in the above-described manner, the probe 1 is caused to access a target data train and a bias voltage is applied between the probe 1 and the substrate 31 similar to the case of data recording. Then, the probe 1 and recording layer 32 are made close to each other to the extent that a tunnel current flows. While maintaining constant the distance between the probe 1 and the recording layer 32, the recording medium 3 is rotated to scan the recording layer 32 with the probe 1. In this case, the tunnel current flowing between the probe 1 and the recording layer 32 changes between the case where the probe 1 passes the characteristic changed area (recorded area) of ON bit and the case where the probe 1 passes the characteristic unchanged area (unrecorded area) of OFF bit. This change is detected and binarized using a predetermined threshold value while scanning the recording layer 32 with the probe 1, to thereby reproduce the recorded binary data.

Another example of the recording medium will be described with reference to Fig. 5.
The recording medium 3' shown in Fig. 5 is constituted by a recording layer 33 made of a metal thin film of Au, Pt and the like, and a substrate 31. A bias voltage is applied between the probe 1 and the recording layer 33. While maintaining constant the distance there between constant similar to the above case, a voltage in excess of a threshold value is applied. As a result, a fine local area immediately under the probe is melted or evaporated to change the surface configuration to have protrusions and recesses so that a data train is recorded (protruded area 4"). If the height of protrusions and the depth of recesses are set equal to or smaller than several nm, the tip of the probe will not become in contact with the protrusions during data reproduction, with the distance between the probe 1 and the recording layer 33 being maintained substantially constant. Since the distance between the probe 1 and the recording layer 32 changes between the case where the probe 1 passes the recorded area and the case where the probe 1 passes the unrecorded area, the tunnel current changes which change is detected in the similar manner described above, to thereby reproduce data.

Next, a method of recording/reproducing information will be described in particular with reference to Fig. 1.

In recording data, the probe 1 is moved by a transport mechanism to the recording position as described with Fig. 6, and a voltage in excess of a threshold voltage is applied to the recording medium 3.

While the probe 1 is moved to the recording position, a bias voltage from a bias supply source 6 is being applied between the probe 1 and the recording medium 3. A tunnel current flowing between the probe 1 and the recording medium 3 is converted into a voltage signal by a current-to-voltage conversion circuit 7, and logarithm-converted by a logarithm conversion circuit 8 so that the signal value becomes proportional to the distance between the probe and the recording medium. An output signal from the logarithm circuit 8 is inputted to an average tunnel current setting circuit 9 from which a difference signal (error signal) from a set signal value corresponding to a desired distance between the probe and the recording layer is outputted. This output signal is sent as a control signal to the Z-direction control electrode 5a of the cylindrical piezoelectric element via a low-pass filter 10 for passing a signal whose frequency is sufficiently lower than the bit detection frequency, a hold circuit 11, and an amplifier 12. Even if the distance between the probe 1 and the recording layer changes because of unevenness on the recording layer surface sufficiently larger than a data bit, a change in the tunnel current caused by the unevenness is converted into an error signal by the average tunnel current setting circuit 9 and a control signal from the amplifier 12 is applied to the X-direction control electrode 5a of the cylindrical piezoelectric element so as to make the error signal zero. In this manner, the distance between the probe 1 and the recording layer is maintained substantially constant. Namely, the average distance between the probe 1 and the recording medium 3 under relative motion is controlled to be constant.

In recording data, a record control circuit 13 sends a signal corresponding to a record signal to a pulse applying circuit 14. A pulse voltage from the pulse applying circuit 14 is added to the bias voltage by an adder 15. The voltage outputted from the adder 15 is applied between the recording medium 3 and the probe 1 to thereby record data in the manner described previously. At the same timing of applying the pulse voltage, the record control circuit 13 sends a signal to the hold circuit 11. Therefore, the hold circuit 11 holds an output signal value so as not to change the distance between the probe 1 and the recording medium 3 while the pulse voltage is applied. As a result, the control voltage to the Z-direction control electrode 5a of the cylindrical piezoelectric element 2 is held.

As described with Fig. 6, in reproducing data, the probe 1 is moved to a desired data train by a transport mechanism. The probe 1 is then scanned to detect a change in the tunnel current flowing between the probe and the recording medium 3 surface caused by the characteristic difference (height difference) between the recorded area and the unrecorded area, to thereby reproduce information. Since a data train is recorded only by positioning the probe 1 by means of the position detection unit of the transport mechanism, the recorded data train may sometimes fluctuate minutely by the influences of thermal drifts and external vibrations. Such influences are also met at the time of reproducing. Therefore, positioning the probe 1 only by the position detection unit of the transport mechanism may sometimes result in an inability of the probe 1 to trace the data train, thereby making poor the S/N ratio of data reproduction. In view of this, according to the present invention, after the probe is moved by the transport mechanism to a desired data train, it is controlled so as to track the data train and reproduce the data. This control will be described below.

In the block diagram shown in Fig. 1, similar to the case of data recording, in reproducing data the probe 1 is controlled in the Z-direction by portion corresponding to the electrode 5a of the cylindrical piezoelectric element 2 so as to make constant the average distance between the probe 1 and the recording medium 3.

The tunnel current obtained while the probe 1 scans the data train superposes upon reproduced signal components of the data train, variable components of fluctuation of the recording layer surface and the like. An output from the logarithm conversion circuit 8 is supplied to a band-pass filter 16 to derive only the signal near at the reproduced signal frequency. In this invention, the probe 1 is caused to vibrate at a frequency fₒ at a smaller amplitude than the width of the data train 4 in the direction perpendicular to the data train 4. This will be described with reference to Fig. 2 and Fig. 3. Fig. 2 shows an example of data trains and a graph showing the amplitude intensity of modulation components relative to the probe scan position. As shown in this graph, the amplitude intensity of modulation components becomes maximum when the probe scans the center of the data train and becomes smaller as the probe 1 displaces from the center of the data train. As the probe 1 vibrates minutely at the frequency fₒ, the envelope of the reproduced signal of the data train changes as indicated at b, c, and d in Fig. 3 which correspond to b, c, and d in Fig. 2. The envelope signal becomes as indicated at b', c' and d'. Specifically, the vibration waveform a of the probe 1 becomes small as indicated at c' when the probe 1 scans the center of the data train as indicated at an arrow c. If the probe 1 displaces upward as indicated by an arrow b, the vibration waveform a of the probe 1 becomes to have a large amplitude and shifted by 180 degrees in phase. If the probe 1 displaced downward as indicated by an arrow d, the vibration waveform a of the probe becomes to have a large amplitude and be in phase with the vibration waveform a. If phase detection is performed using the vibration waveform (standard signal) of the probe 1 at the frequency fₒ as the reference signal, it is possible to obtain a signal proportional to the displacement amount from the data train. Using this signal, a feedback control can be carried out for positioning the probe 1 on the data train. Specifically, this signal is added to the control voltage of the X- or Y-direction control electrode (5b, 5b') of the cylindrical piezoelectric element 2, in such a way that the signal becomes 0 and the feedback control, i.e., tracking control is conducted which locates the probe 1 at the position indicated at c in Fig. 2.

Referring back to Fig. 1, a sinusoidal wave at a frequency fₒ generated by a reference signal oscillator 17 is applied to the electrodes 5b and 5b' of the cylindrical piezoelectric element 2 via an amplifier 18 and an adder 19. The probe 1 is accordingly maintained to vibrate minutely in the direction perpendicular to the data train. On the other hand, the reproduced signal of the data train superposed upon an output from the band-pass filter 16 is rectified by a full-wave rectifier 20. The reproduced signal frequency components of the data train are removed by a band-pass filter 21, to thereby derive only the envelope signal, i.e., the frequency components at the same frequency fₒ of the probe. This envelope signal is inputted to a synchronous rectifier circuit (phase detector) 22 to perform synchronous rectification (phase detection) by using as a reference signal the rectangular signal from a waveform shaper 25 obtained from the standard signal at the frequency fₒ for minutely vibrating the probe 1. An output from the synchronous rectifier circuit is smoothed by a low-pass filter 23 to obtain a signal proportional to the displacement amount between the probe 1 and the data train. This signal is a position displacement signal.

The position displacement signal is amplified by an amplifier 24 and added to the very small vibration signal of the probe 1 at the adder 19. The added signal is applied as a drive voltage to the electrodes 5b and 5b' of the cylindrical piezoelectric element 2. In this manner, the probe 1 is controlled in the direction perpendicular to the data train so as not to displace from the data train. While the probe 1 thus tracks the data train, the reproduced signal of the data train from the band-pass filter 16 is binarized by a binarizing circuit 26 and reproduced by a reproduced signal demodulator circuit 27. In this manner, a stable reproduced signal of a good S/N ratio can be obtained. Namely, by controlling the probe to track the data train in the manner described above, a stable reproduced signal can be obtained without the influences of fluctuations of data train, thermal drifts, and external vibrations.

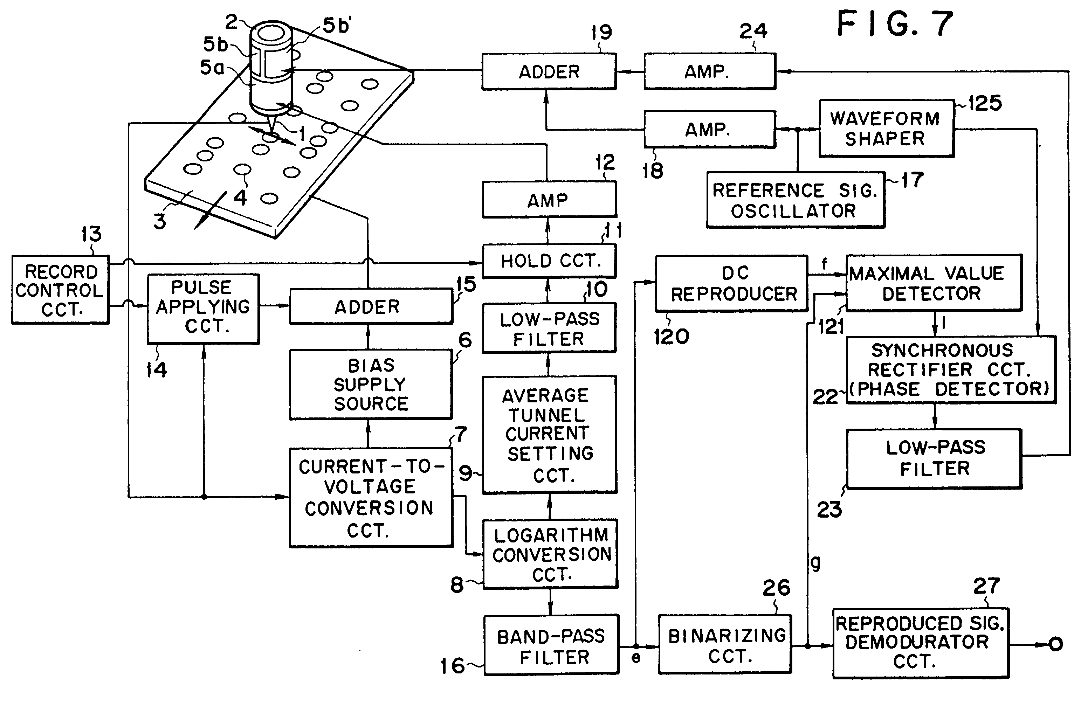

A preferred embodiment of this invention will now be described with reference to Figs. 7 to 9. The perspective view of the embodiment apparatus, recording medium, recording/reproducing, and the like are the same as in the embodiment of Fig. 1-6, so the description thereof is omitted. Like elements to those of the embodiment of Fig. 1-6 are represented by using identical reference numerals.

Fig. 7 is a block diagram showing the structure of the embodiment apparatus.

In Figs. 2 and 3, the bits or ON bits where the characteristic has changed or where the recording layer material has deformed, have been described assuming that they are disposed at equal pitch. There are in some cases ON bits disposed at random (aperiodically) according to the actual record data as particularly shown in Fig. 1. In this case, the ratio of ON bits to OFF bits is not usually 1 : 1, but ON bits are smaller in number than OFF bits. Furthermore, OFF bits may sometimes continue for a long period. The envelope of the reproduced signal for detecting the position displacement described above has paid attention only to ON bit data. The envelope composed of maximum values of ON bit signals is calculated to phase-detect it using the standard signal at the frequency f₀, thereby obtaining the position displacement. If the position displacement is obtained by forming the envelope from the detected reproduced signal in the manner described above, there occurs a problem that phase detection cannot be performed correctly for the signal portion having a large number of OFF bits and that if noises generate at the OFF bit signal portion, the envelope will be distorted. In view of the above, the embodiment apparatus interpolates the OFF bit signal portion in the following manner.

Referring to Fig. 7, a sinusoidal wave at the frequency fₒ generated by the reference signal oscillator 17 is applied to the electrodes 5b and 5b' of the cylindrical piezoelectric element 2 via the amplifier 18 and the adder 19. The probe 1 is accordingly maintained to minutely vibrate in the direction perpendicular to the data train in the manner described previously. The reproduced signal of the data train, i.e., an output from the band-pass filter 16, is wave-shaped by a DC regenerator 120 such that the record level of an OFF bit becomes zero potential, and an output signal f therefrom is inputted to a maximum value detector 121. The output e of the band-pass filter 16 is binarized by the binarizing circuit 26, and an output signal g therefrom is inputted to the maximum value detector 121 and the reproduced signal demodulator circuit 27. The demodulated signal from the reproduced signal demodulator circuit 27 is sent as a read-out data to an unrepresented display unit, control unit and the like.

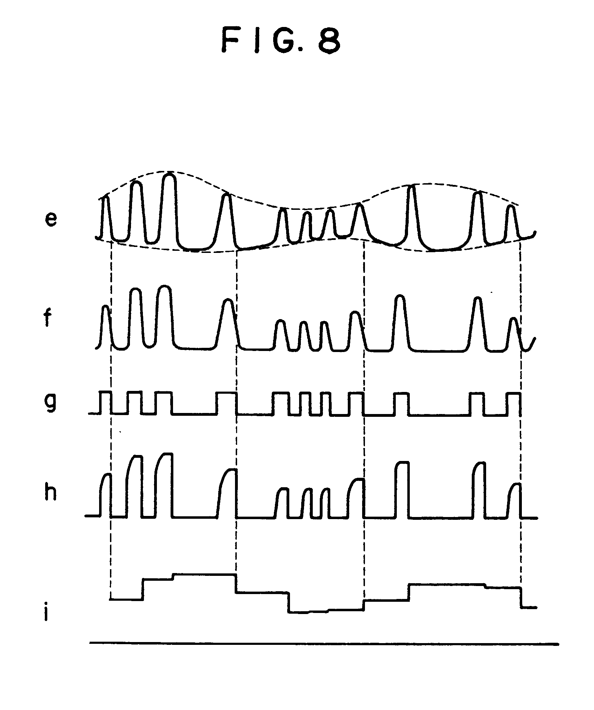

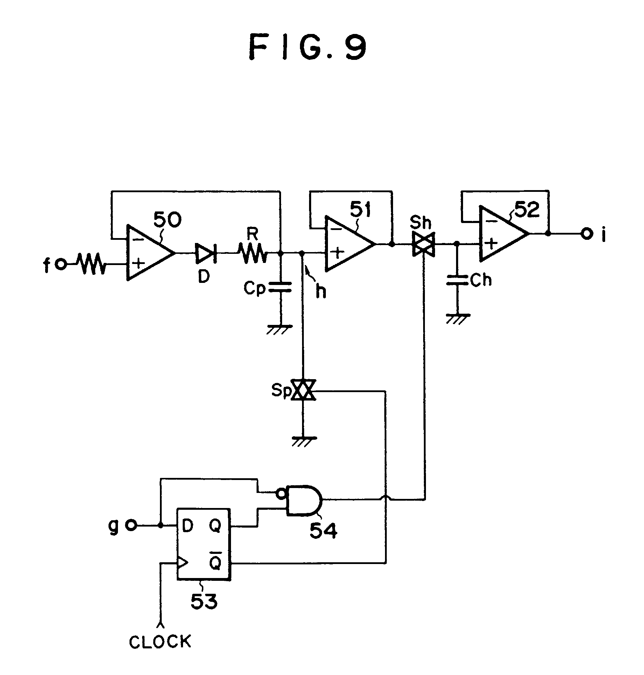

The maximum value detector 121 detects the maximum value of the signal f only during the ON bit state period of the data train, and thereafter holds this maximum value. Fig. 8 is a timing chart showing various signals in the embodiment apparatus, and Fig. 9 shows an example of the circuit of the maximum value detector 121. The following description will be given with reference to Figs. 7, 8 and 9.

The signal f DC-regenerated from the output e of the band-pass filter 16 is inputted to an OP amplifier 50. The output of the OP amplifier 50 is fed back to the inverting input of the OP amplifier via a diode D and a resistor R which is grounded via a capacitor Cp. This circuit constitutes a peak hold circuit. When the binarized output g enters a logic "1" state, an analog switch Sp circuit transits to an OFF state to start the peak hold operation. This circuit is reset when the binarized output g enters a logic "0" state. The output g of the binarizing circuit takes "1" when the data train bit is in an ON state, and "0" when it is in an OFF state. Namely, this peak hold circuit operates only when the ON bit of the data train is detected. As the binarized output g changes from "1" to "0", a trailing edge detector circuit constituted by a D-type flip-flop 53 and AND gate 54 causes an analog switch Sh to turn on. Therefore, the output h of the peak hold circuit is transferred via an OP amplifier 51 to a hold capacitor Ch. At the same time, the peak hold capacitor Cp is shortened by the analog switch Sp to prepare for the next maximum value detection cycle. The voltage across the hold capacitor Ch is supplied as a signal i to a phase detector circuit via an OP amplifier 52 having a low input bias current. Clocks inputted to the flip-flop 53 are used for detecting an edge at a proper timing, and supplied from a clock generator circuit (not shown).

With the above operation, it becomes possible to generate an envelope signal i composed of maximum values of ON bits contained in the data train signal. In this envelope signal i, the OFF bit signal portion is interpolated by holding the maximum value of the ON bit immediately before the OFF bit by means of the peak hold circuit. The envelope signal can therefore be considered as equivalent to the envelope signal obtained when ON bits are periodically and densely arranged within the data train signal. The envelope signal thus obtained contains the very small vibration components at the frequency fₒ of the probe 1, without having the above-described adverse effects to be caused by OFF bits. This envelope signal is inputted to the phase detector 22 and subjected to synchronous detection using as the reference signal a rectangular signal obtained by converting the standard signal at the frequency fₒ by the waveform shaper 125. The output of the phase detector 22 is smoothed by the low-pass filter 23 to derive a signal proportional to the displacement amount between the probe 1 and the data train, the derived signal being the position displacement signal.

The position displacement signal supplied to the amplifier 24 is added to the very small vibration signal of the probe 1 by the adder 19. The resultant signal is applied as the control voltage to the electrodes 5b and 5b' of the cylindrical piezoelectric element 2. As a result, the probe 1 is controlled (tracking control) in the direction perpendicular to the data train without displacing therefrom. In this condition, the reproduced signal of the data train outputted from the band-pass filter 16 is binarized by the binarizing circuit 26, and outputted as a read-out signal from the reproduced signal demodulator circuit 27.

Since the data signal is reproduced under tracking control, a stable reproduced signal with good S/N ratio can be obtained. By controlling the probe to track the data train in the above manner, tracking becomes unsusceptible to fluctuations of the data train, thermal drifts, and external vibrations.

Furthermore, the position displacement is regulated by using maximum values of ON bits corresponding to a large tunnel current, and the OFF bit signal portion is interpolated. As a result, it is possible to track the data train while retaining a stable and large pull-in range and making unsusceptible to noises likely to be generated on an OFF bit signal.

Still further, if there is no data train on the medium or the probe becomes completely apart from the data train by external influences, the binarized output becomes always 0 and the output of the maximum value detector becomes constant. As a result, the probe returns the standard position at the speed corresponding to the time constant of of the low-pass filter 23. If the data train is again detected under control by the position determining unit, the tracking operation of the data train starts again. In this manner, signal regeneration is possible without disturbed tracking even if ON bits of the tracked data train are disposed at random or there occurs a so-called burst error caused by partial defects of the medium. Interpolation described above is effective for the apparatus which tracks data bits.

## Claims

1. An apparatus for detecting a position of a probe (2) with which an apparatus reproduces information by relatively moving the probe (2) along a train (4) of data bit formed on a recording medium (3), the data bit train (4) being disposed in a predetermined direction and aperiodically in accordance with record information, comprising:
- data bit detecting means for obtaining a detection signal of said data bit with said probe (2) relatively moving generally along said data bit;
- position displacement detecting means for detecting the position displacement of said probe (2) from said data bit train (4) in the direction intersecting said predetermined direction, in accordance with said data bit detection signal obtained by said data bit detecting means, and
- vibrating means (17) for giving a relative vibration in the direction intersecting said predetermined direction, to said probe (2) relatively moving generally along said data bit train (4),
said position displacement detecting means comprising a synchronous rectifier circuit (22) for phase-detecting an envelope signal of said data bit detection signal obtained by said data bit detecting means by means of said probe (2) vibrated by said vibrating means (17), by using as a reference signal a vibration signal corresponding to the vibration given by said vibrating means (17),
characterized in that
said position displacement detecting means comprises interpolating means (120,121) for interpolating the envelope signal portion corresponding to bit positions where there is no detection signal, and said synchronous rectifier circuit (22) carries out said phase detection in accordance with the envelope signal interpolated by said interpolating means.

2. The apparatus according to claim 1, further comprising feedback controlling means for feedback controlling to move said probe (2) in the direction intersecting said predetermined direction, in accordance with a detection result by said position displacement detecting means.

3. The apparatus according to claim 1 or 2, wherein said interpolating means interpolates the signal portion corresponding to bit positions where there is no detection signal, by holding the maximum value of said detection signal corresponding to bit positions where there is said detection signal.

4. A method of detecting the position of a probe for an apparatus which reproduces information by relatively moving the probe along a train of data bit formed on a recording medium, the data bit train being disposed in a predetermined direction and aperiodically in accordance with record information, said method comprising the steps of:
- moving said probe relative to said data bit train substantially along said data bit;
- forming a detection signal of said data bit with said probe moving relatively; and
- detecting the position displacement of said probe from said data bit train in the direction intersecting said predetermined direction, in accordance with said data bit detection signal,
- giving a relative vibration in the direction intersecting said predetermined direction, to said probe given a relative motion substantially along said data bit,
said position displacement detecting step comprising a step of phase-detecting an envelope signal of said data bit detection signal obtained by means of said vibrating probe, by using as a reference signal a vibration signal corresponding to said relative vibration,
characterized in that
said position displacement detecting step comprises a step of interpolating a signal portion corresponding to bit positions where there is no detection signal.

## Patentansprüche

1. Vorrichtung zum Nachweisen einer Stellung einer Sonde (2), mit der eine Vorrichtung dadurch Information reproduziert, daß sie die Sonde (2) relativ zu einem Zug (4) von Datenbits bewegt, die auf einem Aufzeichnungsmedium (3) ausgebildet sind, wobei der Datenbitzug (4) in einer vorbestimmten Richtung und aperiodisch nach Maßgabe von Aufzeichnungsinformation angeordnet ist, umfassend:
- eine Datenbit-Detektiereinrichtung zum Gewinnen eines Nachweissignals für das Datenbit mit der Sonde (2), die sich relativ im wesentlichen entlang dem Datenbit bewegt;
- eine stellungsversatz-Detektiereinrichtung zum Nachweisen des Stellungsversatzes der Sonde (2) gegenüber dem Datenbitzug (4) in der Richtung, die die vorbestimmte Richtung schneidet, und zwar nach Maßgabe des Datenbit-Nachweissignals, welches von der Datenbit-Detektiereinrichtung gewonnen wurde, und
- eine Vibriereinrichtung (17), die der Sonde (2), die sich etwa entlang dem Datenbitzug (4) bewegt, eine Relativvibration in der die vorbestimmte Richtung schneidenden Richtung verleiht,
wobei die Stellungsversatz-Detektiereinrichtung eine Synchron-Gleichrichterschaltung (22) aufweist, um ein Hülltermsignal des Datenbit-Nachweissignals, welches von der Datenbit-Detektiereinrichtung mit Hilfe der von der Vibriereinrichtung (17) vibrierten Sonde (2) erhalten wird, einer Phasendemodulation zu unterziehen, wobei als Referenzsignal ein Vibrationssignal verwendet wird, welches der durch die Vibriereinrichtung (17) gebildeten Vibration entspricht,
dadurch gekennzeichnet, daß
die Stellungsversatz-Detektiereinrichtung aufweist:
eine Interpoliereinrichtung (120, 121) zum Interpolieren des Hüllkurvensignalabschnitts, welcher solchen Bitpositionen entspricht, an denen es ein Nachweissignal gibt, und die Synchron-Gleichrichterschaltung (22) die Phasendemodulation nach Maßgabe des von der Interpoliereinrichtung interpolierten Hülltermsignals durchführt.

2. Vorrichtung nach Anspruch 1, weiterhin umfassend:
eine Regeleinrichtung zum Regeln der Bewegung der Sonde (2) in der Richtung, die die vorbestimmte Richtung schneidet, nach Maßgabe eines Nachweisergebnisses seitens der Stellungsversatz-Detektiereinrichtung.

3. Vorrichtung nach Anspruch 1 oder 2, bei der die Interpoliereinrichtung den Signalabschnitt interpoliert, der solchen Bitpositionen entspricht, wo es kein Nachweissignal gibt, indem der Maximalwert des Nachweissignals entsprechend solchen Bitpositionen an denen es das Nachweissignal gibt, gehalten wird.

4. Verfahren zum Nachweisen der Stellung einer Sonde für eine Vorrichtung, die Information dadurch reproduziert, daß sie die Sonde entlang eines Zuges von Datenbits auf einem Aufzeichnungsmedium bewegt, wobei der Datenbitzug in einer vorbestimmten Richtung und aperiodisch nach Maßgabe von Aufzeichnungsinformation angeordnet ist, wobei das Verfahren folgende Schritte aufweist:
- Bewegen der Sonde relativ zu dem Datenbitzug im wesentlichen entlang dem Datenbit;
- Bilden eines Nachweissignals des Datenbits, zu dem sich die Sonde relativ bewegt; und
- Nachweisen des Stellungsversatzes der Sonde gegenüber dem Datenbitzug in der die vorbestimmte Richtung schneidenden Richtung entsprechend dem Datenbit-Nachweissignal,
- in der die vorbestimmte Richtung schneidenden Richtung wird der Sonde eine Relativ-Vibration verliehen, während die Sonde eine Relativbewegung im wesentlichen entlang dem Datenbit ausführt,
wobei der Schritt des Nachweisens des Stellungsversatzes einen Schritt aufweist, bei dem ein Hüllkurvensignal des Datenbit-Nachweissignals, welches durch Vibrieren der Probe erhalten wurde, einer Phasendemodulation unterzogen wird, in dem als Referenzsignal ein Vibriersignal entsprechend der Relativ-Vibration verwendet wird,
dadurch gekennzeichnet, daß
der Schritt des Nachweises des Stellungsversatzes einen Schritt des Interpolierens eines Signalabschnitts umfaßt, welcher solchen Bitpositionen entspricht, wo es kein Nachweissignal gibt.

## Revendications

1. Appareil pour détecter une position d'une sonde (2) avec laquelle un appareil reproduit des informations en déplaçant de façon relative la sonde (2) suivant un train (4) de bits de données formé sur un support (3) d'enregistrement, le train (4) de bits de données étant disposé dans une direction prédéterminée et de façon apériodique en fonction d'informations d'enregistrement comprenant :
- des moyens de détection de bits de données pour obtenir un signal de détection desdits bits de données avec ladite sonde (2) se déplaçant globalement de façon relative suivant lesdits bits de données ;
- des moyens de détection de déplacement de position pour détecter le déplacement de position de ladite sonde (2) par rapport audit train (4) de bits de données dans une direction qui coupe ladite direction prédéterminée, en fonction dudit signal de détection de bits de données obtenu par lesdits moyens de détection de bits de données, et
- des moyens (17) vibrants pour conférer un vibration relative dans une direction coupant ladite direction prédéterminée, à ladite sonde (2) se déplaçant globalement de façon relative suivant ledit train (4) de bits de données,
lesdits moyens de détection de déplacement de position comprenant un circuit (22) redresseur synchrone pour détecter la phase d'un signal d'enveloppe dudit signal de détection de bits de données obtenu par lesdits moyens de détection de bits de données au moyen de ladite sonde (2) mise en vibration par lesdits moyens (17) vibrants, en utilisant comme signal de référence un signal de vibration correspondant à la vibration conférée par lesdits moyens (17) vibrants,
caractérisé en ce que
lesdits moyens de détection de déplacement de position comprennent des moyens (120, 121) d'interpolation pour interpoler la partie du signal d'enveloppe qui correspond à des positions de bits pour lesquelles aucun signal de détection n'est présent, et ledit circuit (22) redresseur synchrone effectue ladite détection de phase en fonction du signal d'enveloppe interpolé par lesdits moyens d'interpolation.

2. Appareil selon la revendication 1, comprenant en outre des moyens de commande à rétroaction pour effectuer une commande à rétroaction pour déplacer ladite sonde (2) dans une direction qui coupe ladite direction prédéterminée, en fonction d'un résultat de détection fourni par lesdits moyens de détection de déplacement de position.

3. Appareil selon la revendication 1 ou 2, dans lequel lesdits moyens d'interpolation interpolent la partie du signal qui correspond à des positions de bits pour lesquelles aucun signal de détection n'est présent, en maintenant la valeur maximale dudit signal de détection qui correspond à des positions de bits pour lesquelles ledit signal de détection est présent.

4. Procédé de détection de la position d'une sonde pour un appareil qui reproduit des informations en déplaçant de façon relative la sonde suivant un train de bits de données formé sur un support d'enregistrement, le train de bits de données étant disposé dans une direction prédéterminée et de façon apériodique en fonction d'informations d'enregistrement, ledit procédé comprenant les étapes qui consistent :
- à déplacer ladite sonde par rapport audit train de bits de données sensiblement suivant lesdits bits de données ;
- à former un signal de détection desdits bits de données avec ladite sonde se déplaçant de façon relative ; et
- à détecter le déplacement de position de ladite sonde par rapport audit train de bits de données dans une direction qui coupe ladite direction prédéterminée, en fonction dudit signal de détection de bits de données,
- à conférer une vibration relative dans une direction qui coupe ladite direction prédéterminée, à ladite sonde à laquelle est conféré un mouvement relatif sensiblement suivant lesdits bits de données,
ladite étape de détection du déplacement de position comprenant une étape consistant à détecter la phase d'un signal d'enveloppe dudit signal de détection de bits de données obtenu au moyen de ladite sonde vibrante, en utilisant comme signal de référence un signal de vibration correspondant à ladite vibration relative,
caractérisé en ce que
ladite étape de détection de déplacement de position comprend une étape consistant à interpoler une partie du signal qui correspond à des positions de bits pour lesquelles aucun signal de détection n'est présent.
